# EUROPÄISCHE PATENTANMELDUNG

(11) **EP 2 375 296 A1**
(43) Veröffentlichungstag der Anmeldung: **12.10.2011**
(21) Anmeldenummer: 10159195.6
(22) Anmeldetag: 07.04.2010
(51) Int. Cl.: G05B 19/042

(54) **Verfahren zur Inbetriebnahme einer Maschine aus der Automatisierungstechnik und Recheneinrichtung**

(71) Anmelder: SIEMENS AKTIENGESELLSCHAFT, 80333 München (DE)
(72) Erfinder: Tanneberger, Lars, 09439 Amtsberg OT Dittersdorf (DE); Keller, Jochen, 09125 Chemnitz (DE)

(57) **Zusammenfassung**

Die Erfindung betrifft ein Verfahren zur Inbetriebnahme einer Maschine (4) aus der Automatisierungstechnik,
- wobei eine Maschinenkonfiguration (19) der Maschine (4) eingelesen wird,
- wobei anhand der Maschinenkonfiguration (19), Inbetriebnahmedaten der Maschinenserie der die Maschine (4) angehört identifiziert und eingelesen werden,
- wobei aus den Inbetriebnahmedaten der Maschinenserie anhand der Maschinenkonfiguration (19) die zu der Maschine zugehörigen Inbetriebnahmedaten (21) der Maschine (4) ermittelt werden und an die Maschine (4) übermittelt werden.

Weiterhin betrifft die Erfindung eine Recheneinrichtung. Die Erfindung ermöglicht eine einfache Inbetriebnahme einer Maschine (4) aus der Automatisierungstechnik.

## Beschreibung

Die Erfindung betrifft ein Verfahren zur Inbetriebnahme einer Maschine aus der Automatisierungstechnik. Weiterhin betrifft die Erfindung eine Recheneinrichtung.

Aus der EP 2 002 316 B1 ist eine Steuereinrichtung mit einem integrierten Maschinenmodell bekannt. Dabei sind alle Informationen und relevanten Daten der Maschinenserie, zu der die Maschine gehört, in der Steuereinrichtung gespeichert und von einem Bediener abrufbar. Informationen und relevante Daten umfassen unter anderem Anleitungen zur Montage und Demontage von Baugruppen der Maschine, eine Liste vorhandener Schnittstellen, Inbetriebsetzungsinformationen, sowie Informationen zur Parametrisierung vorhandener Elemente der Maschine. Anhand dieser Informationen muss der Bediener zur Inbetriebnahme der Maschine diese manuell konfigurieren. Der aktuelle Maschinenstand und im Laufe des Betriebs der Maschine durchgeführte Änderungen, welche fachspezifisch auch als "machine evolution" bezeichnet werden, werden in einem Logbuch der Maschine, das auf der Steuereinrichtung gespeichert ist, dokumentiert.

Nachteilig beim Stand der Technik ist, dass durch die notwendige manuelle Konfiguration an den Inbetriebnehmer einer Maschine aus der Automatisierungstechnik hohe Qualifizierungsanforderungen gestellt werden und die Inbetriebnahme der Maschine heutzutage ein komplexer Vorgang ist, der umfangreiche Kenntnisse über die Maschine erfordert.

Weiterhin kommt es immer wieder zu fehlerhaften Parametrierungen bei der Inbetriebnahme der Maschine, da des Öfteren andere Komponenten in die Maschine eingebaut wurden, als diejenigen von denen der Inbetriebnehmer ausgeht. Dies führt zu recht langen Inbetriebnahmezeiten und Fehlersuchen, insbesondere bei der Inbetriebnahme beim Hersteller der Maschine aus der Automatisierungstechnik.

Es ist Aufgabe der Erfindung, eine einfache Inbetriebnahme einer Maschine aus der Automatisierungstechnik zu ermöglichen.

Diese Aufgabe wird gelöst durch ein Verfahren zur Inbetriebnahme einer Maschine aus der Automatisierungstechnik, wobei eine Maschinenkonfiguration der Maschine eingelesen wird, wobei anhand der Maschinenkonfiguration, Inbetriebnahmedaten der Maschinenserie der die Maschine angehört identifiziert und eingelesen werden, wobei aus den Inbetriebnahmedaten der Maschinenserie anhand der Maschinenkonfiguration die zu der Maschine zugehörigen Inbetriebnahmedaten der Maschine ermittelt werden und an die Maschine übermittelt werden.

Weiterhin wird diese Aufgabe gelöst durch eine Recheneinrichtung zum Durchführen des erfindungsgemäßen Verfahrens, wobei auf der Recheneinrichtung ein Computerprogramm gespeichert ist oder mehrere Computerprogramme gespeichert sind, so dass bei Aufruf des Computerprogramms oder der Computerprogramme das erfindungsgemäße Verfahren ausführbar ist.

Vorteilhafte Ausbildungen der Erfindung ergeben sich aus den abhängigen Ansprüchen.

Vorteilhafte Ausbildungen des Verfahrens ergeben sich analog zu vorteilhaften Ausbildungen der Recheneinrichtung.

Es erweist sich als vorteilhaft, wenn von einer Inbetriebnahmeeinheit aus einem Warenwirtschaftssystem eine Maschinenkonfiguration der Maschine eingelesen wird, wobei Inbetriebnahmedaten der Maschinenserie, der die Maschine angehört in einem Produktdatenverwaltungssystem gespeichert sind und von der Inbetriebnahmeeinheit, anhand der Maschinenkonfiguration identifiziert werden und aus dem Produktdatenverwaltungssystem von der Inbetriebnahmeeinheit eingelesen werden, wobei von der Inbetriebnahmeeinheit aus den Inbetriebnahmedaten der Maschinenserie anhand der Maschinenkonfiguration die zu der Maschine zugehörigen Inbetriebnahmedaten der Maschine ermittelt werden und an die Maschine übermittelt werden.

Es erweist sich als vorteilhaft, wenn bei der Inbetriebnahme ein Inbetriebnahmeprotokoll erstellt wird und in dem Produktdatenverwaltungssystem gespeichert wird. Hierdurch wird eine eindeutige Reproduzierbarkeit der Inbetriebnahme der Maschine und von Aktualisierungen von Hardware und Software der Maschine ermöglicht.

Weiterhin erweist sich als vorteilhaft, wenn bevor von der Inbetriebnahmeeinheit aus dem Warenwirtschaftssystem die Maschinenkonfiguration der Maschine eingelesen wird, die Materialstammnummern der Maschinenserie von dem Warenwirtschaftssystem an das Produktdatenverwaltungssystem übermittelt werden und im Produktdatenverwaltungssystem bereits gespeicherte Materialstammnummern der Maschinenserie mit den übermittelten Materialstammnummern aktualisiert werden. Durch diese Maßnahme wir sichergestellt, dass die Materialstammnummern immer aktuell, d.h. auf dem neuesten Stand sind.

Ein Ausführungsbeispiel der Erfindung ist in der Zeichnung dargestellt und wird im Folgenden näher erläutert. Dabei zeigen:
- FIG 1: ein erfindungsgemäßes Verfahren zur Inbetriebnahme einer Maschine aus der Automatisierungstechnik,
- FIG 2: ein Produktdatenmodell und ein Inbetriebnahmedatenmodell und
- FIG 3: Inbetriebnahmedaten der Maschinenserie, Inbetriebnahmedaten der Maschine und eine Maschinenkonfiguration.

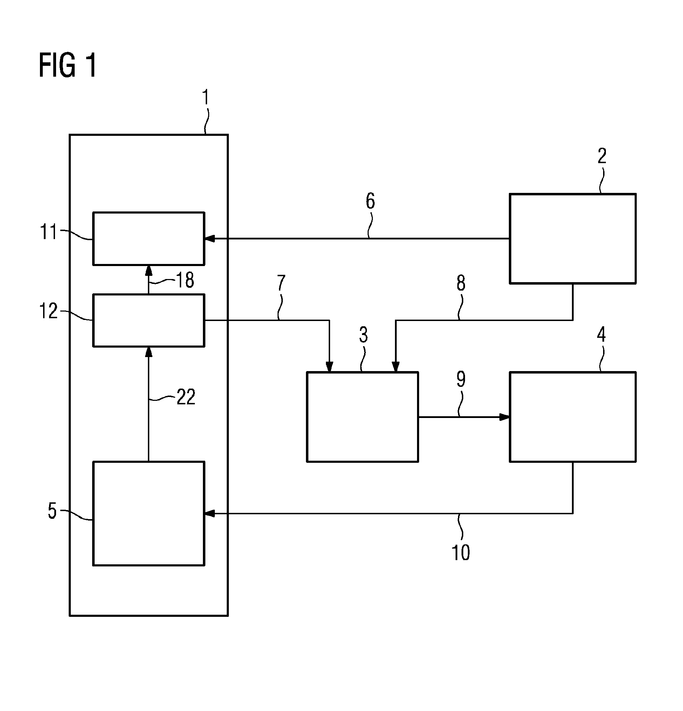

In FIG 1 ist das erfindungsgemäße Verfahren zur Inbetriebnahme einer Maschine 4 aus der Automatisierungstechnik dargestellt. Es ist dabei im Rahmen einer blockförmigen Darstellung ein Produktdatenverwaltungssystem 1, ein Warenwirtschaftssystem 2 und als wesentliches Element eine Inbetriebnahmeeinheit 3 dargestellt.

Das Produktdatenverwaltungssystem 1, weist dabei ein Produktdatenmodell 11 und ein Inbetriebnahmedatenmodell 12, sowie vorzugsweise ein Instanzverwaltungssystem 5 auf. Es sei an dieser Stelle angemerkt, dass im Rahmen der vorliegenden Anmeldung unter den Begriffen Produktdatenverwaltungssystem, Inbetriebnahmeeinheit und Warenwirtschaftssystem sowohl jeweils eine Software zu verstehen ist, die, wenn sie auf einem oder mehreren Rechnern abläuft, eine derartige Funktionalität realisiert als auch der oder die Rechner auf denen die jeweilige Software abläuft. Das Produktdatenverwaltungssystem 1, das Warenwirtschaftssystem 2 und die Inbetriebnahmeeinheit 3 können auf einem einzelnen Rechner ablaufen oder auf mehreren Rechnern getrennt voneinander ablaufen und somit auf einem einzelnen oder mehreren Rechnern realisiert sein, wobei ein Rechner auch in Form eines Multiprozessorsystems vorliegen kann.

Weiterhin sei an dieser Stelle angemerkt, dass im Rahmen der vorliegenden Anmeldung unter dem Begriff Recheneinrichtung ein einzelner Rechner oder mehrere Rechner zu verstehen sind, wobei ein Rechner auch in Form eines Multiprozessorsystems vorliegen kann.

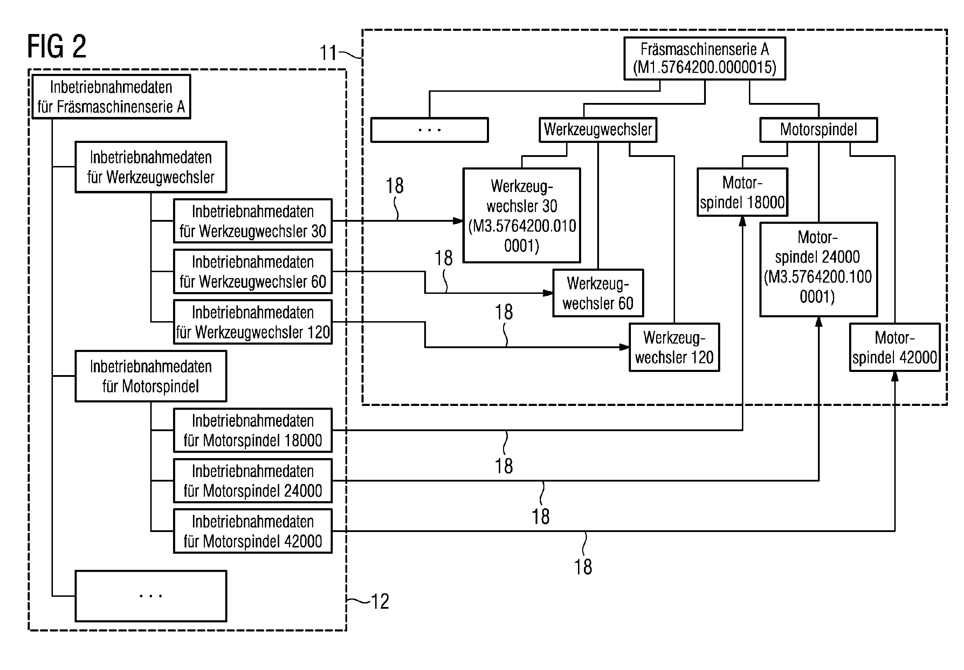

Das Produktdatenmodell 11 enthält dabei alle Produktdaten der verschiedenen Maschinenserien, die der Hersteller der Maschine herstellt und die Verknüpfungen innerhalb einer Maschinenserie. In FIG 2 rechts ist das Produktdatenmodell 11 im Rahmen des Ausführungsbeispiels bezüglich der Fräsmaschinenserie A dargestellt. Jede vom Hersteller z.B. angebotene Fräsmaschine kann mit unterschiedlichen Komponenten, wie z.B. verschiedenen Werkzeugwechslern und verschiedenen Motorspindeln, die z.B. über unterschiedliche Umdrehungsgeschwindigkeiten verfügen, bestückt werden. Alle diese Ausstattungsmöglichkeiten der Maschine bilden die Maschinenserie der Maschine, die im Rahmen des Ausführungsbeispiels in Form der Fräsmaschinenserie A, welche alle Ausstattungsmöglichkeiten einer Fräsmaschine vom Typ A beinhaltet. Innerhalb des Produktdatenmodells 11 sind dabei die verschiedenen möglichen Ausstattungsmöglichkeiten in FIG 2 in Form einer Baumstruktur dargestellt. Die Fräsmaschinenserie A weist z.B. im Rahmen des Ausführungsbeispiels einen Werkzeugwechsler und eine Motorspindel, sowie noch andere Komponenten auf, die in FIG 2 in Form von Punkten dargestellt sind. Der Werkzeugwechsler kann dabei in drei verschiedenen Varianten vorliegen, nämlich in Form des Werkzeugwechslers 30, in Form des Werkzeugwechslers 60 oder in Form des Werkzeugwechslers 120, welche sich in ihrem mechanischen Aufbau voneinander unterscheiden. Die Motorspindel kann dabei z.B. in Form der Motorspindel 18000, der Motorspindel 24000 oder der Motorspindel 42000, die sich in ihrer maximalen Drehzahl voneinander unterscheiden, vorliegen. Die Zahl hinter der Motorspindel gibt die maximal mögliche Drehzahl pro Minute der jeweiligen Motorspindel an.

Solche Produktdatenverwaltungssysteme, welche ein Produktdatenmodell 11 enthalten, sind heute Stand der Technik und werden von den Herstellern der Maschinen zur Verwaltung ihrer Produktdaten verwendet. Erfindungsgemäß wird das Produktdatenverwaltungssystem 1 um ein Inbetriebnahmedatenmodell 12 erweitert. Das Inbetriebnahmedatenmodell 12 enthält für die einzelnen Komponenten einer Maschinenserie, die zur Inbetriebnahme der Maschine für die Komponenten der Maschinenserie notwendigen Inbetriebnahmedaten. Die Inbetriebnahmedaten liegen z.B. in Form von Regel- und Steuerungsparametern, wie z.B. Regelverstärkungen und/oder zu überwachenden Grenzwerten etc. vor.

Im Rahmen des Ausführungsbeispiels liegt das Inbetriebnahmedatenmodell 12 in Form der in FIG 2 links dargestellten Baumstruktur vor. Die Inbetriebnahmedaten für Fräsmaschinenserie A umfassen dabei im Rahmen des Ausführungsbeispiels unter anderem die Inbetriebnahmedaten für die verschiednen möglichen zur Auswahl stehenden Werkzeugwechsler, Motorspindeln und für die anderen Komponenten der Fräsmaschinenserie A, wobei die in FIG 2 die anderen Komponenten in Form von Punkten dargestellt sind. Die Inbetriebnahmedaten für die Werkzeugwechsler umfassen dabei die Inbetriebnahmedaten für den Werkzeugwechsler 30, die Inbetriebnahmedaten für den Werkzeugwechsler 60 und die Inbetriebnahmedaten für den Werkzeugwechsler 120. Die Inbetriebnahmedaten für die Motorspindeln umfassen dabei die Inbetriebnahmedaten für die Motorspindel 18000, die Inbetriebnahmedaten für die Motorspindel 24000 und die Inbetriebnahmedaten für die Motorspindel 42000.

Im Produktdatenmodell 11 sind im Rahmen des Ausführungsbeispiels die einzelnen Komponenten und Komponentengruppen der Maschine in Form von Materialstammnummern hinterlegt. So lautet z.B. die Materialstammnummer im Rahmen des Ausführungsbeispiels für den Werkzeugwechsler 30 M3.5764200.0100001 und die Materialstammnummern für die Motorspindel 24000 M3.5764200.1000001 und die Materialstammnummer für die Fräsmaschinenserie A M1.5764200.0000015. Die Materialstammnummern sind in FIG 2 in den zugehörigen Kästen in Klammern geschrieben. Die unmittelbar hinter dem Buchstaben stehende Nummer gibt an, in welcher Hierarchieebene auf dem Baum die jeweilige Komponente oder Komponentengruppe steht, wobei die höchste Hierarchieebene die Fräsmaschinenserie A ist. Die Materialstammnummer der Fräsmaschinenserie A ist somit eine übergeordnete Materialstammnummer für die untergeordneten Materialstammnummern z.B. der Motorspindel 24000 und des Werkzeugwechslers 30. Die Inbetriebnahmedaten einer Komponente des Inbetriebnahmedatenmodells 12 sind mit den Produktdaten der entsprechenden Komponente des Produktdatenmodells 11 verlinkt, was durch entsprechende Pfeile 18 in FIG 2 und einem Pfeil 18 in FIG 1 dargestellt ist. Somit wird zu den Inbetriebnahmedaten der möglichen Komponenten der Fräsmaschinenserie A die jeweilig zugehörige im Produktdatenmodell 11 hinterlegte Materialstammnummer zugeordnet. Die Inbetriebnahmedaten für den Werkzeugwechsler 30 beinhalten somit die Materialstammnummer des Werkzeugwechslers 30 und die Inbetriebnahmedaten für die Motorspindel 24000 beinhalten somit die Materialstammnummer der Motorspindel 24000. Entsprechend beinhalten die Inbetriebnahmedaten der anderen Komponenten die jeweiligen Materialstammnummern der ihnen im Produktdatenmodel jeweilig zugeordneten Komponente. Die Inbetriebnahmedaten einer Komponente können dabei zum Beispiel in Form einer Datei vorliegen, deren Inhalt z.B. die zu der Komponente zugehörigen Regel- und Steuerungsparametern umfasst und deren Name oder Bestandteile deren Namens der zugehörigen Materialstammnummer entspricht.

Eine Materialstammnummer kann z.B. in Form einer Bestellnummer vorliegen.

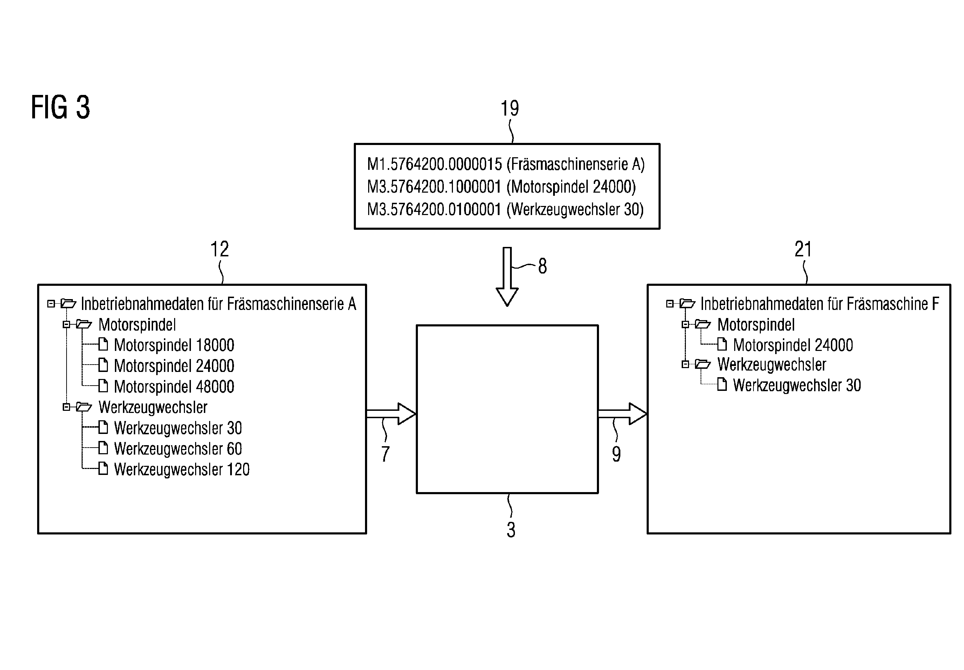

Das Warenwirtschaftssystem 2 (siehe FIG 1) kann z.B. in Form eines sogenannten fachspezifisch bezeichneten Enterprise Resource Planning Systems (ERP-System) vorliegen. Ein ERP-System ist eine komplexe Anwendungssoftware zur Unterstützung der Ressourcenplanung eines gesamten Unternehmens. Dies kann z.B. die Materialwirtschaft (Beschaffung, Lagerhaltung) das Finanz- und Rechnungswesen und die Stammdatenverwaltung umfassen. Ein solches Warenwirtschaftssystem 2 kann z.B. in Form der auf einem Rechner ablaufenden Software SAP R/3 des Unternehmens SAP realisiert sein. Geht eine Bestellung einer Maschine aus der Automatisierungstechnik im Warenwirtschaftssystem 2 ein, wird durch dieses ein Fertigungsauftrag erstellt und die zur Fertigung der Maschine notwendigen Ressourcen (z.B. Komponenten der Maschine, die zur physikalischen Fertigung der bestellten Maschine notwendig sind) ermittelt. Das Warenwirtschaftssystem 2 ermittelt zu der bestellten Maschine die Maschinenkonfiguration 19 (siehe FIG 3) der bestellten Maschine. Die Maschinenkonfiguration 19 umfasst die Komponenten der Maschine, wobei die Maschinenkonfiguration 19 im Rahmen des Ausführungsbeispiels in Form einer Liste mit Materialstammnummern, die die Komponenten der Maschine angeben, vorliegt. Die Maschinenkonfiguration 19 besteht somit im Rahmen des Ausführungsbeispiels aus den Materialstammnummern, die die einzelnen für die konkrete Maschine benötigten Komponenten angeben. Im Rahmen des Ausführungsbeispiels hat ein Kunde z.B. eine Fräsmaschine F, die der Fräsmaschinenserie A angehört, mit der Motorspindel 24000 und dem Werkzeugwechsler 30 bestellt. Infolge wird von dem Warenwirtschaftssystem 2 eine entsprechende Maschinenkonfiguration 19, die die entsprechenden Materialstammnummern enthält, erzeugt. Im Rahmen des Ausführungsbeispiels enthält die Maschinenkonfiguration 19 somit die Materialstammnummer der Fräsmaschinenserie A, die Materialstammnummer der Motorspindel 24000 und die Materialstammnummer des Werkzeugwechslers 30 (siehe FIG 3).

Erfindungsgemäß wird von einer Inbetriebnahmeeinheit 3 aus dem Warenwirtschaftssystem 2 die Maschinenkonfiguration 19 der Maschine 4 eingelesen, was in FIG 1 und FIG 3 durch den Pfeil 8 dargestellt ist. Anschließend werden von der Inbetriebnahmeeinheit 3 anhand der Maschinenkonfiguration 19 die Inbetriebnahmedaten der Maschinenserie, der die Maschine 4 angehört, identifiziert und aus dem Produktverwaltungssystem 1 eingelesen, was in FIG 1 und 3 durch einen Pfeil 7 dargestellt ist. Die Identifizierung erfolgt durch die Inbetriebnahmeeinheit 3 im Rahmen des Ausführungsbeispiels anhand der Materialstammnummer der Maschinenserie, die Bestandteil der Maschinenkonfiguration 19 ist. Entsprechend der Materialstammnummer der Maschinenserie wird von der Inbetriebnahmeeinheit 3 eine Aufforderung an das Produktdatenverwaltungssystem 1 gesendet die Inbetriebnahmedaten der zugehörigen Maschinenserie an sie zu übermitteln.

Im Rahmen des Ausführungsbeispiels ist die Maschinenserie durch die Fräsmaschinenserie A gegeben. Die Inbetriebnahmedaten sind dabei, wie in FIG 3 dargestellt, in Form von den jeweiligen Komponenten zugeordneten Dateien abgespeichert. So beinhaltet z.B., wie in FIG 3 dargestellt, die Datei "Motorspindel 24000" alle Inbetriebnahmedaten zur Motorspindel 24000. Weiterhin ist in der entsprechenden Datei aber auch die zur Motorspindel 24000 zugehörige Materialstammnummer (M3.5764200.1000001) gespeichert, wobei die Materialstammnummer aber auch Bestandteil des Namens der Datei sein kann. Die Materialstammnummer ist solchermaßen Bestandteil der Inbetriebnahmedaten der jeweiligen Komponente. Die Materialstammnummern der Maschinenserie sind solchermaßen Bestandteil der Inbetriebnahmedaten der Maschinenserie der Maschine.

Von der Inbetriebnahmeeinheit 3 (siehe FIG 1 und 3) wird aus den Inbetriebnahmedaten der Maschinenserie anhand der Maschinenkonfiguration 19, die zu der Maschine 4 zugehörigen Inbetriebnahmedaten 21 der Maschine 4, d.h. im Ausführungsbeispiel der Fräsmaschine F, ermittelt und an die Maschine 4 übermittelt, was durch einen Pfeil 9 in FIG 1 und FIG 3 dargestellt ist. Anhand der in der Maschinenkonfiguration 19 gespeicherten Materialstammnummern weiß die Inbetriebnahmeeinheit 3, welche der Inbetriebnahmedaten der Maschinenserie, d.h. im Ausführungsbeispiel, welche der Inbetriebnahmedaten der Fräsmaschinenserie A für die Inbetriebnahme der Maschine 4 benötigt werden und ermittelt aus den Inbetriebnahmedaten der Maschinenserie, d.h. im Ausführungsbeispiel aus den Inbetriebnahmedaten der Fräsmaschinenserie A, die für die konkrete Maschine 4 benötigten Inbetriebnahmedaten 21 der Maschine 4. Solchermaßen werden erfindungsgemäß die Inbetriebnahmedaten der Maschine 4 vollautomatisiert ermittelt. Anhand der solchermaßen ermittelten Inbetriebnahmedaten der Maschine 4 erfolgt nun die Inbetriebnahme der Maschine 4.

Im Rahmen einer vorteilhaften Ausführungsform der Erfindung werden bevor von der Inbetriebnahmeeinheit 3 aus dem Warenwirtschaftssystem 2 die Maschinenkonfiguration 19 der Maschine 4 eingelesen wird, die Materialstammnummern der Maschinenserie, d.h. im Rahmen des Ausführungsbeispiels die Materialstammnummern der Fräsmaschinenserie A von dem Warenwirtschaftssystem 2 an das Produktdatenverwaltungssystem 1 übermittelt und die im Produktdatenverwaltungssystem 1 im Produktdatenmodell 11 bereits gespeicherten Materialstammnummern der Maschinenserie mit den übermittelten Materialstammnummern aktualisiert. Hierdurch wird sichergestellt, dass im Produktdatenverwaltungssystem 1 und insbesondere im Produktdatenmodell 11 immer die gleichen Materialstammnummern zu den Komponenten gespeichert sind, wie im Warenwirtschaftssystem 2. Das Produktdatenverwaltungssystem 1 wird solchermaßen mit dem Warenwirtschaftssystem 2 synchronisiert.

Im Rahmen einer vorteilhaften Ausbildung der Erfindung wird bei der Inbetriebnahme der Maschine 4 ein Inbetriebnahmeprotokoll erstellt und in dem Produktdatenverwaltungssystem 1 gespeichert, was durch einen Pfeil 10 in FIG 1 angedeutet ist, wobei im Rahmen des Ausführungsbeispiels, das Inbetriebnahmeprotokoll in einem Instanzverwaltungssystem 5, das Bestandteil des Produktdatenverwaltungssystem 1 ist, gespeichert. Das Instanzverwaltungssystem 5 kann z.B. in Form einer Datenbank vorliegen. Weiterhin kann auch ein mit dem Kunden durchgeführtes Abnahmeprotokoll in dem Instanzverwaltungssystem 5 zu Zwecken der Nachverfolgbarkeit und des Services abgespeichert werden. Erkenntnisse aus dem Betrieb und der Weiterentwicklung unterschiedlicher Maschinen können dabei als Grundlage für Verbesserungen der Inbetriebnahmedaten herangezogen werden indem die Inbetriebnahmedaten von dem Instanzverwaltungssystem 5 angepasst werden, was durch einen Pfeil 22 in FIG 1 dargestellt ist. Das Produktdatenverwaltungssystem 1 kann weiterhin in Form eines sogenannten Product Lifecycle Management Systems (PLM-System) vorliegen.

Im Gegensatz zum Stand der Technik werden bei der Erfindung nur die zur Inbetriebnahme für die konkret vorliegende Ausprägung der bestellten Maschine notwendigen Inbetriebnahmedaten auf der Maschine gespeichert. Somit kann der notwendige Speicherplatz auf der Maschine reduziert werden.

Weiterhin wird durch die Verlagerung von wesentlichen Inbetriebnahmeprozessschritten in die Arbeitsvorbereitung die Inbetriebnahmezeit an der Maschine deutlich verkürzt. Das erfindungsgemäße automatisierte Verfahren erlaubt eine eindeutige Reproduzierbarkeit einer beim Hersteller der Maschine oder später beim Maschinenbetreiber durchgeführten Inbetriebnahme. Weiterhin können durch die automatisierte Ermittlung der Inbetriebnahmedaten der Maschine, sowie durch das automatische Einbringen der Daten in die Maschine, die heutzutage notwendigen hohen Qualifizierungsanforderungen an den Inbetriebnehmer entfallen.

Weiterhin sind durch die zentrale Dokumentation von Maschinenänderungen im Instanzverwaltungssystem 5, welche z.B. beim Maschinenbetreiber im Laufe der Zeit erfolgen, falls z.B. ein Fehlerfall in einer Maschine auftritt, bei der auch andere Maschinen betroffen sind, die entsprechenden notwenigen Änderungen für die betroffenen Maschinen des Maschinenherstellers mittels des Instanzverwaltungssystem 5 herleitbar.

Die Maschine aus der Automatisierungstechnik kann z.B. in Form einer Werkzeug- oder Produktionsmaschine vorliegen.

## Patentansprüche

1. Verfahren zur Inbetriebnahme einer Maschine (4) aus der Automatisierungstechnik,
- wobei eine Maschinenkonfiguration (19) der Maschine (4) eingelesen wird,
- wobei anhand der Maschinenkonfiguration (19), Inbetriebnahmedaten der Maschinenserie der die Maschine (4) angehört identifiziert und eingelesen werden,
- wobei aus den Inbetriebnahmedaten der Maschinenserie anhand der Maschinenkonfiguration (19) die zu der Maschine zugehörigen Inbetriebnahmedaten (21) der Maschine (4) ermittelt werden und an die Maschine (4) übermittelt werden.

2. Verfahren nach Anspruch 1,
**dadurch gekennzeichnet, dass**
- von einer Inbetriebnahmeeinheit (3) aus einem Warenwirtschaftssystem (2) eine Maschinenkonfiguration (19) der Maschine (4) eingelesen wird,
- wobei Inbetriebnahmedaten der Maschinenserie, der die Maschine angehört in einem Produktdatenverwaltungssystem (1) gespeichert sind und von der Inbetriebnahmeeinheit (3), anhand der Maschinenkonfiguration (19) identifiziert werden und aus dem Produktdatenverwaltungssystem (1) von der Inbetriebnahmeeinheit (3) eingelesen werden,
- wobei von der Inbetriebnahmeeinheit (3) aus den Inbetriebnahmedaten der Maschinenserie anhand der Maschinenkonfiguration (19) die zu der Maschine zugehörigen Inbetriebnahmedaten (21) der Maschine (4) ermittelt werden und an die Maschine (4) übermittelt werden.

3. Verfahren nach Anspruch 2,
**dadurch gekennzeichnet, dass** bei der Inbetriebnahme ein Inbetriebnahmeprotokoll erstellt wird und in dem Produktdatenverwaltungssystem (1) gespeichert wird.

4. Verfahren nach Anspruch 2 oder 3,
**dadurch gekennzeichnet, dass** bevor von der Inbetriebnahmeeinheit (3) aus dem Warenwirtschaftssystem (2) die Maschinenkonfiguration (19) der Maschine (4) eingelesen wird, die Materialstammnummern der Maschinenserie von dem Warenwirtschaftssystem (2) an das Produktdatenverwaltungssystem (1) übermittelt werden und im Produktdatenverwaltungssystem (1) bereits gespeicherte Materialstammnummern der Maschinenserie mit den übermittelten Materialstammnummern aktualisiert werden.

5. Recheneinrichtung zum Durchführen eines Verfahrens nach einem der Ansprüche 1 bis 4, wobei auf der Recheneinrichtung ein Computerprogramm gespeichert ist oder mehrere Computerprogramme gespeichert sind, so dass bei Aufruf des Computerprogramms oder der Computerprogramme ein Verfahren nach einem der Ansprüche 1 bis 4 ausführbar ist.
